# EUROPÄISCHE PATENTANMELDUNG

(11) **EP 1 739 599 A2**
(43) Veröffentlichungstag der Anmeldung: **03.01.2007**
(21) Anmeldenummer: 06012523.4
(22) Anmeldetag: 19.06.2006
(51) Int. Cl.: G06K 19/077

(54) **Datenträger**

(30) Priorität: 27.06.2005 DE 20510153 U
(71) Anmelder: Thies, Janczek, 24113 Molfsee (DE)
(72) Erfinder: Thies, Janczek, 24113 Molfsee (DE)
(74) Vertreter: Ostermann, Thomas

(57) **Zusammenfassung**

Die Erfindung betrifft einen Datenträger mit einem flachen Trägerelement, wobei dem Trägerelement mindestens ein Speichersegment zur Speicherung von benutzerspezifischen Informationen und mindestens ein Beschriftungssegment zur Speicherung von visuell lesbaren Informationen zugeordnet sind, wobei dem Trägerelement ein Mehrfachinformationssegment zugeordnet ist, das eine Mehrzahl von übereinander angeordneten Informationsschichten umfasst, wobei mindestens zwei Informationsschichten beschreibbar und/oder bedruckbar sind und mindestens eine obere Informationsschicht von einer benachbarten unteren Informationsschicht trennbar ausgebildet ist.

## Beschreibung

Die Erfindung betrifft einen Datenträger mit einem flachen Trägerelement, wobei dem Trägerelement mindestens ein Speichersegment zur Speicherung von benutzerspezifischen Informationen und mindestens ein Beschriftungssegment zur Speicherung von visuell lesbaren Informationen zugeordnet sind.

Aus der DE 197 16 099 A1 ist ein kartenförmiger Datenträger mit einem Trägerelement bekannt, auf dem ein Beschriftungssegment zur Speicherung von visuell lesbaren Informationen aufgebracht ist. Das Beschriftungssegment ist durch eine aufreißbare Folie abgedeckt. Hierdurch ist das Beschriftungssegment vor dem unerwünschten Zugriff von Personen gesichert. Der Informationsgehalt beschränkt sich auf das bei der Herstellung der Karte gebildete Beschriftungssegment.

Aus der DE 198 51 836 A1 ist ein kartenförmiger Datenträger mit einem Trägerelement bekannt, das mit einer thermoreversiblen Schicht als Beschriftungssegment versehen ist. Hierdurch können sequentiell auf dem Beschriftungssegment verschiedene Informationen aufgebracht werden. Die Informationsaufnahmekapazität ist jedoch auf die Fläche des Beschriftungssegmentes beschränkt.

Aus der DE 200 17 161 U1 ist ein kartenförmiger Datenträger mit einem flachen Trägerelement bekannt, der eine Mehrzahl von Beschriftungssegmenten zur Aufnahme von unterschiedlichen visuell lesbaren Informationen aufweist. Die Anzahl und Größe der Beschriftungsfelder ist jedoch durch die Größe des Datenträgers begrenzt.

Aus der DE 196 07 363 A1 ist ein kartenförmiger Datenträger mit einem flachen Trägerelement bekannt, in dem ein Chip als Speichersegment zur Speicherung von benutzerspezifischen Informationen integriert ist. Das Speichersegment ermöglicht das Speichern von Informationen, so dass de Datenträger für mehrere Anwendungen eingesetzt werden kann. Für die Nutzung der entsprechenden Anwendungen ist jedoch stets eine elektrische Kontaktierung mit einem Kartenlesegerät erforderlich.

Aus der DE 101 24 327 A1 ist ein Datenträger mit einem Trägerelement bekannt, das zum einen als Speichersegment einen Magnetstreifen zur Speicherung von benutzerspezifischen Informationen und zum anderen mindestens ein Beschriftungssegment zur Speicherung von visuell lesbaren Informationen wie beispielsweise Kontonummer, Kundennummer, Kartenherausgeber oder dergleichen aufweist. Zur Erhöhung des Informationsgehaltes der durch die ISO-Norm festgelegten Dimension des Datenträgers ist über dem Speichersegment ein weiteres Beschriftungssegment klebend aufgebracht. Das weitere Beschriftungssegment weist visuell lesbare Informationen auf und ist als Barcode ausgebildet.

Nachteilig an dem bekannten Datenträger ist, dass der Herstellungsaufwand relativ hoch ist, um eine Wechselwirkung zwischen dem übereinander angeordneten elektromagnetischen Speichersegment und dem Beschriftungssegment zu verhindern.

Aufgabe der vorliegenden Erfindung ist, einen Datenträger derart weiterzubilden, dass der Informationsgehalt des Datenträgers weiter verbessert wird.

Zur Lösung dieser Aufgabe ist die Erfindung in Verbindung mit dem Oberbegriff des Patentanspruchs 1 dadurch gekennzeichnet, dass dem Trägerelement ein Mehrfachinformationssegment zugeordnet ist, dass eine Mehrzahl von übereinander angeordneten Informationsschichten umfasst, wobei mindestens zwei Informationsschichten beschreibbar und/oder bedruckbar sind und mindestens eine obere Informationsschicht von einer benachbarten unteren Informationsschicht trennbar ausgebildet ist.

Der besondere Vorteil der Erfindung besteht darin, dass durch das Vorsehen eines zusätzlichen Mehrfachinformationssegmentes an dem Trägerelement, das mindestens zwei übereinander angeordnete Informationsschichten umfasst, zusätzlich Fläche bereitgestellt wird zum visuellen Beschreiben bzw. Bedrucken von Informationen. Zum einen können die Lagen von Informationsschichten Werbebotschaften, Rabattstreifen oder Gutscheine eines Kartenherausgebers enthalten. Der Karteninhaber kann die vorzugsweise mit einer unterschiedlichen Beschriftung versehenen Informationsschriften nach seiner Wahl nacheinander einsehen bzw. einlösen. Alternativ können die Lagen von Informationsschichten auch als Notizschicht genutzt werden, wenn die Informationsschichten frei von einer Bedruckung sind. Der Karteninhaber kann die einzelnen Notizschichten zum Anfertigen von Notizen nutzen, wie beispielsweise das Aufschreiben eines Zahlungsbetrages für eine Transaktion, wenn der Datenträger als Bankkarte oder Kreditkarte verwendet wird.

Nach einer bevorzugten Ausführungsform der Erfindung ist das Mehrfachinformationssegment als gesondertes Halbzeug hergestellt und haftend an dem Trägerelement des Datenträgers gehalten. Das Trägerelement weist eine Ausnehmung auf, in der das Mehrfachinformationssegment gelagert ist, wobei vorzugsweise eine obere Informationsschicht bündig zu einer Oberseite (Oberfläche) des Trägerelementes angeordnet ist. Vorteilhaft können die vorhandenen Herstellungsverfahren für Karten unverändert eingesetzt werden, wobei für die Ausnehmung lediglich eine Ausstanzung oder eine Ausfräsung erforderlich ist. Bei Verbrauch des Mehrfachinformationssegmentes kann es vorgesehen sein, dass ein aktualisiertes Mehrfachinformationssegment in Form eines "Heftchens" von dem Kartenherausgeber vertrieben wird und einfach durch den Kunden selbst an dem Trägerelement befestigt wird. Die Ausstellung einer neuen Karte ist nicht erforderlich.

Nach einer ersten Ausführungsform der Erfindung kann die Ausnehmung des Trägerelementes als eine Vertiefung ausgebildet sein, wobei eine unterste Lage der Informationsschichten haftend an einer Bodenfläche der Vertiefung anbringbar ist. Hierdurch ergibt sich eine einfache Befestigung des Mehrfachinformationssegmentes.

Nach einer alternativen Ausführungsform kann die Ausnehmung des Trägerelementes auch durch eine durchgehende Aussparung gebildet sein, die vorteilhaft durch einen herstellungstechnisch einfach zu bewirkenden Stanzvorgang erzielt wird. Das Mehrfachinformationssegment ist vorzugsweise über einen nachgiebigen Halterahmen an Schmalseiten der Aussparung gehalten.

Weitere Vorteile der Erfindung ergeben sich aus den weiteren Unteransprüchen.

Zwei Ausführungsbeispiele der Erfindung werden nachfolgend anhand der Zeichnungen näher erläutert.

Es zeigen:
- Figur 1: eine perspektivische Ansicht eines Datenträgers nach einer ersten Ausführungsform,
- Figur 2: eine vergrößerte Darstellung einer Einzelheit X des Datenträgers in Figur 1,
- Figur 3: einen Querschnitt durch den Datenträger gemäß Figur 1 im Bereich des Mehrfachinformationssegmentes,
- Figur 4: einen Querschnitt durch einen Datenträger nach einer zweiten Ausführungsform im Bereich der Aufnahme des Mehrfachinformationssegmentes, wobei das Mehrfachinformationssegment mittels eines Halterahmens an Schmalseiten einer dafür vorgesehenen Aussparung des Datenträgers halterbar ist,
- Figur 5: einen vergrößerten Querschnitt durch eine Informationsschicht gemäß Figur 3,
- Figur 6a: eine perspektivische Vorderansicht eines Halterahmens für den Datenträger,
- Figur 6b: eine Seitenansicht des Halterahmens gemäß Figur 6a und

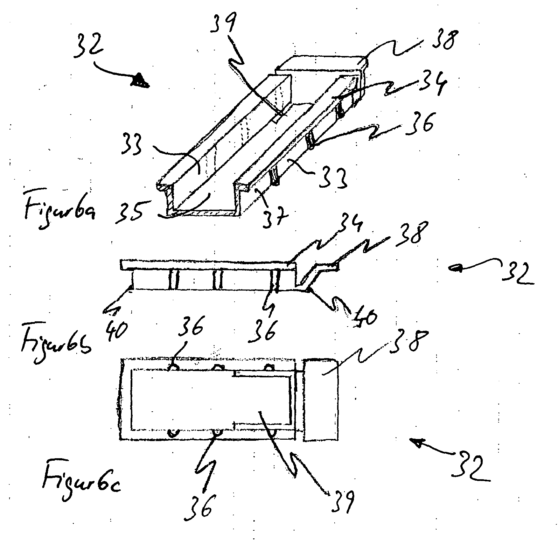

- Figur 6c: eine Untenansicht des Halterahmens gemäß Figur 6a.

Ein erfindungsgemäßer Datenträger 1 ist als Karte mit den Dimensionen nach der ISO-Norm 7816 ausgebildet. Sie kann als Kreditkarte, Kundenkarte, Bankkarte Verwendung finden. Alternativ kann der Datenträger auch eine andere Form aufweisen. Wesentlich ist, dass auf einem Träger eine Mehrzahl von im Folgenden näher erläuterten Lagen von Informationsschichten vorgesehen ist.

Der Datenträger 1 weist zum einen ein Trägerelement (Trägerschicht) 2 auf, die aus mindestens einer Kunststoffschicht oder Papier-/Kartonschicht gebildet ist. Die Trägerschicht 2 kann durch Laminieren mehrerer Kunststoffschichten oder Papierschichten gebildet sein. Alternativ kann die Trägerschicht auch durch Spritzgießen eines Kunststoffmaterials hergestellt sein.

Auf einer flächigen Oberseite 3 der Trägerschicht 2 ist zum einen ein Speichersegment 4 und zum anderen ein oder mehrere Beschriftungssegmente 5 angeordnet.

Das Speichersegment 4 wird durch einen Halbleiterchip gebildet, der in Form eines Chipmoduls in bekannter Weise in eine Vertiefung der Trägerschicht 2 eingebettet ist. Kontaktflächen 6 des Chipmoduls sind bündig zu der Oberseite 3 der Trägerschicht 2 angeordnet. In dem Chip des Chipmoduls sind benutzerspezifische Informationen, wie beispielsweise Kartennummer, Karteninhaber und dergleichen elektronisch gespeichert.

Auf einer Unterseite 7 der Trägerschicht 2 ist ein Magnetstreifen 8 aufgebracht, der - wie der Chip - zur Speicherung von benutzerspezifischen Informationen, wie zum Beispiel Kartennummer des Datenträgers, Kontoinhaber und dergleichen enthalten kann.

Die Beschriftungssegmente 5 können auf der Oberseite 3 der Trägerschicht 2 ein Kartennummerfeld 5.1, ein Kartenlaufzeitfeld 5.2, ein Karteninhaberfeld 5.3, ein Kartenausstellerfeld 5.4 sowie ein Feld 5.5 zur Kennzeichnung des transaktionsverarbeitenden Unternehmens in bekannter Weise umfassen. Diese Felder 5.1, 5.2, 5.3, 5.4, 5.5 dienen zur Speicherung von visuell lesbaren Funktionen und können beispielsweise durch Hochprägung bzw. Bedruckung bzw. Belaserung von Firmenlogos bereitgestellt sein.

In einem freien Bereich der Trägerschicht 2 bzw. Oberseite 3 weist die Trägerschicht 2 als Ausnehmung 9 eine Vertiefung auf, in der ein Mehrfachinformationssegment 10 befestigt ist. Das Mehrfachinformationssegment 10 umfasst eine Mehrzahl von übereinander angeordneten und flächig aneinander liegenden Informationsschichten 11, die jeweils visuell beschreibbar oder bedruckbar sind. Die Informationsschichten 11 sind vorzugsweise als Informationsstreifen ausgebildet und weisen jeweils die gleiche Dimension, das heißt die gleiche Breite, Länge und Höhe auf. Die Dimension der Informationsschichten 11 ist derart gewählt, dass sie mit geringem Spiel in die Vertiefung 9 eingesetzt werden können. Das Mehrfachinformationssegment 10 kann aus 10 bis 20 Lagen von Informationsschichten 11 gebildet sein, wobei vorzugsweise eine obere Informationsschicht 11.1 bündig zu der Oberseite 3 der Trägerschicht 2 abschließt. Die Informationsschichten 11 können jeweils aus einem Papiermaterial oder einem Kunststofffolienmaterial (PET-Material) bestehen und weisen jeweils eine gleiche Dicke in einem Bereich von 10 bis 60 µm auf.

Die Informationsschichten 11, 11.1 sind jeweils über eine Klebeschicht 12 mit einer benachbarten unteren Informationsschicht 11.2 verbunden. Die unterste Informationsschicht 11.3 des Mehrfachinformationssegmentes 10 ist durch die Klebeschicht 12 haftend an einer Bodenfläche 13 der Vertiefung 9 befestigt. Die Klebeschicht 12 erstreckt sich über den größten Flächenbereich der Informationsschichten 11, wobei lediglich im Bereich einer Schmalseite 14 der Informationsschichten 11 keine Klebefläche vorhanden ist, so dass die einzelnen Informationsschichten 11, 11.1 nacheinander einfach durch den Kartennutzer manuell erfasst und einzeln von einer darunter liegenden Informationsschicht 11, 11.1, 11.2 abgezogen werden können.

Nach einer ersten Variante des Mehrfachinformationssegmentes 10, die nicht dargestellt ist, kann auf einer Oberseite 15 oder Rückseite 16 der Informationsschichten 11 eine vom Kartenherausgeber aufgebrachte Bedruckung vorgesehen sein. Die Bedruckung kann beispielsweise visuell lesbare Informationen im Zusammenhang mit Werbebotschaften, Rabattaktionen, Gutscheinen enthalten. Eine Rückseite 16 der Informationsschichten 11 kann beispielsweise mit einem Logo des Kartenherausgebers bedruckt sein.

Vorteilhaft dient somit der Datenträger 1 zur Aufnahme von mehreren Lagen von Informationsschichten 11, die jeweils kartenherausgeberbezogene Informationen enthalten. Bei Verbrauch aller Informationsschichten 11 kann ein weiteres Mehrfachinformationssegment 10 mit aktualisierten Informationsschichten 11 in die Vertiefung 9 des vorhandenen Datenträgers 1 auf einfache Weise mittels einer Klebefolie eingebracht werden.

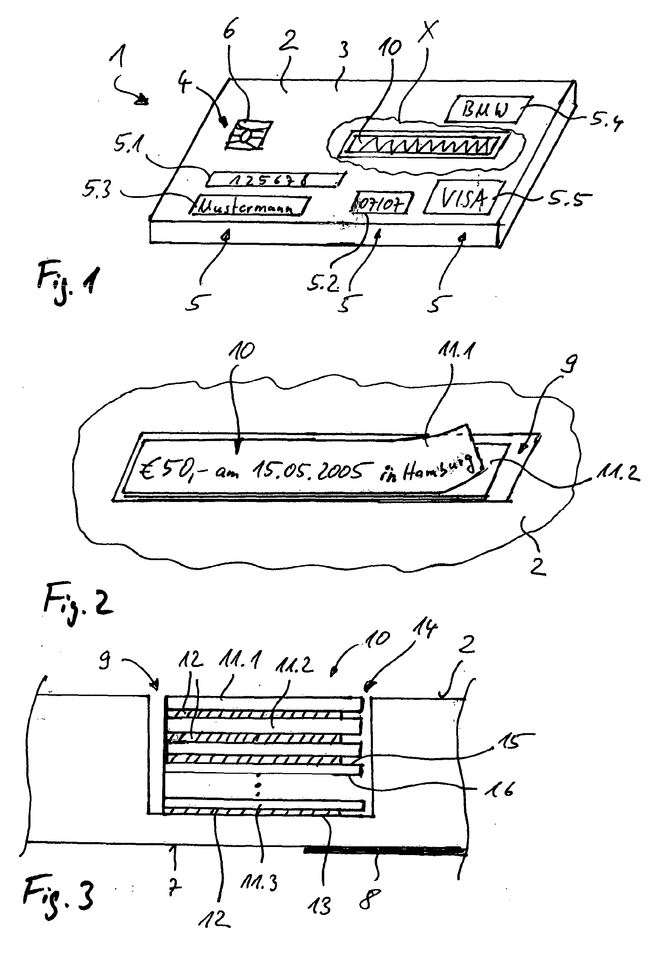

Nach einer alternativen Verwendung des Mehrfachinformationssegmentes 10 - wie sie in Figur 2 dargestellt ist -, können die Informationsschichten 11 unbeschrieben bzw. unbedruckt bereitgestellt sein. Der Karteninhaber kann nun die einzelnen Informationsschichten 11 zum Beschreiben von Notizen in der Regel (oder vorzugsweise) mittels eines Kugelschreibers nutzen. Beispielsweise kann der Karteninhaber bei jeder Transaktion des als Kreditkarte genutzten Datenträgers 1 den Betrag und das Datum der Transaktion, also beispielsweise "€ 50 am 15.05.2005 in Hamburg", auf der oberen Informationsschicht 11.1 notieren. Dadurch, dass die Informationsschichten 11 jeweils mit der Klebeschicht 12 versehen sind, kann der Karteninhaber den Informationsstreifen 11.1 von dem unteren Informationsstreifen 11.2 abziehen und an einem gewünschten Ort wieder aufkleben. Die Informationsschicht 11.1 kann somit als Merkhilfe dienen.

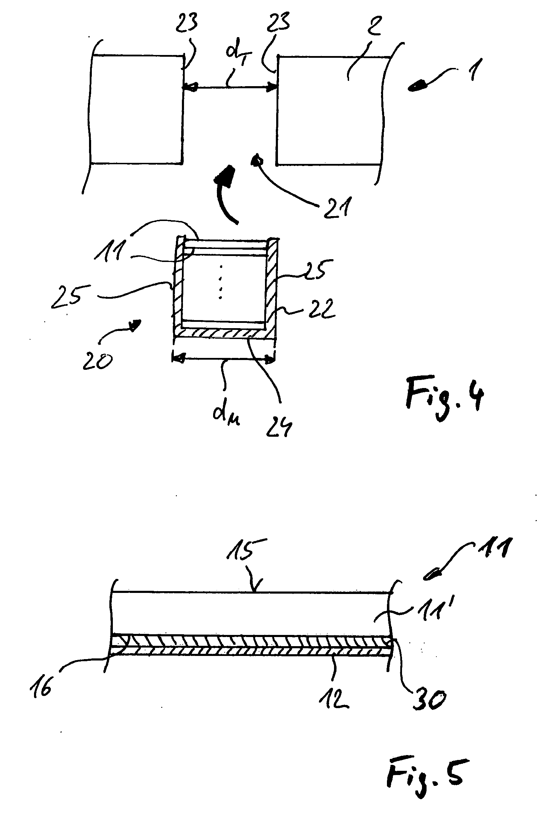

Nach einer alternativen Ausführungsform des Datenträgers 1 gemäß Figur 4 kann eine für ein Mehrfachinformationssegment 20 vorgesehene Ausnehmung auch als eine durchgehende Aussparung 21 ausgebildet sein. Die Aussparung 21 wird vorzugsweise durch Stanzung bei der Herstellung des Datenträgers 1 ausgebildet. Das Mehrfachinformationssegment 20 weist neben den Lagen von Informationsschichten 11 einen Halterahmen 22 aus einem flexiblen Kunststoffmaterial auf. Damit der Halterahmen 22 des Mehrfachinformationssegmentes 20 klemmend in der Aussparung 21 gehalten ist, ist ein lichter Abstand d_{T} gegenüberliegender Schmalseiten 23 der Trägerschicht 2 etwas kleiner ausgebildet als ein Abstand d_{M} des Halterahmens 22. Der Halterahmen 22 ist topfförmig ausgebildet und weist einen Boden 24 sowie sich randseitig von demselben erstreckende aufrechte Seitenwände 25 auf. Die Höhe der Seitenwände 25 sowie die Dicke des Bodens 24 korrespondiert zu der Dicke der Trägerschicht 2, so dass das Mehrfachinformationssegment 20 in der montierten Stellung bündig zu der Oberseite 3 und der Unterseite 7 verläuft.

Wie aus Figur 5 besser ersichtlich ist, kann eine Informationsschicht 11, 11.1, 11.2, 11.3 einen Informationsträger 11' aufweisen, dessen Oberseite 15 beispielsweise zur Beschriftung durch den Karteninhaber dient. Eine Rückseite 16 des Informationsträgers 11' ist mit der Bedruckung 30 versehen, die mehrere Lagen Druckfarbe mit vorzugsweise einer hochopaken, weißen Schicht zur Erhöhung des Kontrastes des Drucks aufweist. Auf eine dem Informationsträger 11' abgewandten Seite schließt sich an die Bedruckung 30 die Klebeschicht 12 an, die auch weiß eingefärbt sein kann zur Kontrasterhöhung bzw. Opazitätserhöhung. Hierdurch wird verhindert, dass die Bedruckungsschicht 30 nicht durchscheint. Alternativ kann die Klebeschicht 12 auch andere Einfärbungen aufweisen.

Nach einer alternativen Ausführungsform der Erfindung kann statt des Halterahmens 22 ein wannenförmiger Halterahmen 32 mit mindestens an freien Seiten von Seitenwänden 33 desselben in einem rechten Winkel abragenden Randstegen 34 ausgebildet sein. Die Randstege 34 können auch umlaufend angeordnet sein. Im vorliegenden Ausführungsbeispiel sind lediglich zwei gegenüberliegende Seitenwände 33 vorgesehen, die sich in Längsrichtung des Halterahmens 32 senkrecht von einem Boden 35 desselben erstrecken. Der Randsteg 34, der parallel zu dem Boden 35 verläuft, weist vorzugsweise eine Länge von 0,15 mm bis 0,25 mm auf.

In Längsrichtung des in Draufsicht gesehen rechteckförmigen Halterahmens 32 erstrecken sich eine Mehrzahl von Fixierungs-/Stabilisierungsstreben 36, die sich jeweils in einem Abstand zueinander senkrecht zum Boden 35 auf einer Außenseite 37 der Seitenwände 33 erstrecken. Die Fixierungs-/Stabilisierungsstreben 36 sind beabstandet zueinander ausgebildet und erstrecken sich von einer Höhe des Bodens 35 bis unmittelbar zu einer Unterseite des Randstegs 34. Sie ermöglichen eine vereinfachte Befestigung des Halterahmens 32 in der Ausnehmung 21 des Datenträgers 1.

Darüber hinaus ist an dem Halterahmen 32 ein Spannelement 38 angeformt, das sich in Höhe der Randstege 34 an einer Stirnseite des Halterahmens 32 parallel zum Boden 35 bzw. der Randstege 34 erstreckt. Das Spannelement 38 ist über ein Filmscharnier mit dem Boden 35 des Halterahmens 32 verbunden. Das Spannelement 38 wird unter Bildung einer Vorspannung zusammen mit dem Halterahmen 32 in die Ausnehmung 21 eingedrückt und mit dem Halterahmen 32 durch Verklebung in der Ausnehmung 21 fixiert.

Der Boden 35 weist auf einer dem Spannelement 38 zugewandten Seite einen Freischnitt 39 auf, so dass ein Teilbereich des Bodens 35 federnd ausgebildet ist. Ist die Aussparung 21 durchgehend offen ausgebildet, bildet der Boden 35 zugleich einen Teilbereich der Rückseite 7 des Datenträgers 1. Durch manuelles Drücken auf den Freischnittabschnitt 39 des Bodens 35 von der Rückseite 7 des Datenträgers 1 her kann somit auf einfache Weise ein Anheben des in dem Halterahmen 32 angeordneten Informationsschichten 11 realisiert werden, wobei zumindest eine oberste Informationsschicht 11 gegenüber der Oberseite 3 des Datenträgers absteht, so dass das oberste Informationssegment 11 auf einfache Weise manuell von dem Folienstapel 11.1, 11.2 ... abgezogen werden kann.

In unteren Eckbereichen der Seitenwände 33 bzw. des Bodens 35 sind Hinterschnitte 40 vorgesehen, so dass der Halterahmen 32 auf einfache Weise in der Aussparung 21 des Datenträgers 1 fixiert werden kann.

Der Halterahmen 32 ist vorzugsweise als ein Kunststoff-Spritzgießteil ausgebildet, wobei das Kunststoffmaterial stabil und flexibel ist. Beispielsweise kann das Kunststoffmaterial als thermoelastisches Elastomer (TPE) mit einer Wandstärke von 0,15 mm bis 0,25 mm ausgebildet sein. Der Halterahmen 32 kann eine Länge von 40 mm und eine Breite 15 mm aufweisen.

## Patentansprüche

1. Datenträger mit einem flachen Trägerelement, wobei dem Trägerelement mindestens ein Speichersegment zur Speicherung von benutzerspezifischen Informationen und mindestens ein Beschriftungssegment zur Speicherung von visuell lesbaren Informationen zugeordnet sind, **dadurch gekennzeichnet, dass** dem Trägerelement (2) ein Mehrfachinformationssegment (10, 20) zugeordnet ist, das eine Mehrzahl von übereinander angeordneten Informationsschichten (11, 11.1, 11.2, 11.3) umfasst, wobei mindestens zwei Informationsschichten (11.1, 11.2) beschreibbar und/oder bedruckbar sind und mindestens eine obere Informationsschicht (11.1) von einer benachbarten unteren Informationsschicht (11.2) trennbar ausgebildet ist.

2. Datenträger nach Anspruch 1, **dadurch gekennzeichnet, dass** das Mehrfachinformationssegment (10, 20) als gesondertes Halbzeug herstellbar und mit dem Trägerelement (2) haftend verbindbar ist.

3. Datenträger nach Anspruch 1 oder 2, **dadurch gekennzeichnet, dass** das Trägerelement (2) eine Ausnehmung (9, 21) aufweist, derart, dass das Mehrfachinformationssegment (10, 20) zumindest unter bündigem Abschluss einer Seite (15) desselben zu einer Seite (3, 7) des Trägerelementes (2) angeordnet ist.

4. Datenträger nach einem der Ansprüche 1 bis 3, **dadurch gekennzeichnet, dass** die Ausnehmung als eine Vertiefung (9) ausgebildet ist, an dessen Bodenfläche (13) eine unterste Lage (11.3) der Informationsschicht (11) des Mehrfachinformationssegmentes (10) haftend angebracht ist.

5. Datenträger nach einem der Ansprüche 1 bis 3, **dadurch gekennzeichnet, dass** die Ausnehmung als eine durchgehende Aussparung (21) ausgebildet ist, in die mittels eines sich an den Umfang der Lagen von Informationsschichten (11) erstreckenden Halterahmens (22, 32) das Mehrfachinformationssegment (20) gehaltert ist.

6. Datenträger nach einem der Ansprüche 1 bis 5, **dadurch gekennzeichnet, dass** die Lagen von Informationsschichten (11) an einer Rückseite (16) derselben mit einer Klebeschicht (12) versehen sind, derart, dass sie voneinander durch Ausübung einer manuellen Kraft abziehbar sind.

7. Datenträger nach einem der Ansprüche 1 bis 6, **dadurch gekennzeichnet, dass** die Informationsschichten (11) im Wesentlichen vollflächig klebend miteinander verbunden sind, wobei lediglich in einem Bereich einer vorgegebenen Seite (14) der Informationsschichten (11) keine Klebeschicht (12) vorhanden ist zum manuellen Erfassen der einzelnen Informationsschichten (11).

8. Datenträger nach einem der Ansprüche 1 bis 7, **dadurch gekennzeichnet, dass** die Informationsschichten (11) jeweils aus einem beschreibbaren und/oder bedruckbaren Kunststofffolienmaterial oder Papiermaterial bestehen.

9. Datenträger nach einem der Ansprüche 1 bis 8, **dadurch gekennzeichnet, dass** die Informationsschichten (11) zumindest auf einer Rückseite (16) derselben mit einer Information bedruckt sind.

10. Datenträger nach einem der Ansprüche 1 bis 9, **dadurch gekennzeichnet, dass** das Mehrfachinformationssegment (10) aus mindestens zehn Lagen von Informationsschichten (11) besteht, wobei jede Informationsschicht (11) eine Dicke in einem Bereich von 10 µm bis 60 µm aufweist.

11. Datenträger nach einem der Ansprüche 1 bis 10, **dadurch gekennzeichnet, dass** das Speichersegment (4) durch einen Magnetstreifen (8) und/oder durch einen Chip gebildet ist.

12. Datenträger nach einem der Ansprüche 1 bis 11, **dadurch gekennzeichnet, dass** das Beschriftungssegment (5) als ein Kartennummerfeld (5.1) und/oder als ein Kartenlaufzeitfeld (5.2) und/oder als ein Karteninhaberfeld (5.3) und/oder als ein Kartenausstellerfeld (5.4) und/oder als ein Feld für die Darstellung eines transaktionsverarbeitenden Unternehmens (5.5) ausgebildet ist.
